# EUROPEAN PATENT APPLICATION

(11) **EP 4 726 486 A1**
(43) Date of publication of application: **15.04.2026**
(21) Application number: 24858192.8
(22) Date of filing: 29.07.2024
(51) Int. Cl.: G05D 1/229, G05D 1/646, G06V 20/58, A01D 34/00

(54) **BOUNDARY-FOLLOWING WORKING METHOD AND APPARATUS, ELECTRONIC DEVICE, AND STORAGE MEDIUM**

(30) Priority: 31.08.2023 CN 202311117364
(71) Applicant: Willand (Beijing) Technology Co., Ltd., Beijing 100192 (CN)
(72) Inventor: ZHANG, Hanjun, Beijing 100192 (CN); LI, Chunhong, Beijing 100192 (CN); YU, Tianning, Beijing 100192 (CN); CHEN, Zichong, Beijing 100192 (CN)
(74) Representative: Kraus & Lederer PartGmbB
(86) International application number: PCT/CN2024/108257
(87) International publication number: WO 2025/044649

(57) **Abstract**

Embodiments of the present disclosure provide a method for a boundary operation, an apparatus for a boundary operation, an electronic device, and a storage medium, wherein the method for a boundary operation comprises: controlling an autonomous operating apparatus to move based on a virtual boundary and detecting a physical boundary while the autonomous operating apparatus moves; determining a boundary type of the physical boundary, after detecting the physical boundary; and controlling the autonomous operating apparatus to move in a corresponding operation mode based on the boundary type of the physical boundary, wherein at least two boundary types are defined for the physical boundary, the at least two boundary types correspond to at least two operation modes respectively, and when the autonomous operating apparatus moves in different operation modes, a respective distance between the autonomous operating apparatus and the physical boundary in each of the operation modes is different. Therefore, this solution can adjust the distance between the autonomous operating apparatus and the physical boundary based on the boundary type of the physical boundary, thereby resulting in better operation effect in the region enclosed by the physical boundary and a region located in the vicinity of the physical boundary, and improving the operation efficiency of the autonomous operating apparatus.

## Description

The present disclosure claims priority to Chinese patent application for invention with the application number of "CN202311117364.3" filed on 31 August 2023 and entitled "METHOD FOR BOUNDARY OPERATION, APPARATUS FOR BOUNDARY OPERATION, ELECTRONIC DEVICE, AND STORAGE MEDIUM", the entire content of which is incorporated herein by reference.

### TECHNICAL FIELD

Embodiments of the present disclosure relate to the technical field of automation, and particularly relate to a method for a boundary operation, an apparatus for a boundary operation, an electronic device, and a storage medium.

### BACKGROUND

With the continuous development of automation technology, more and more autonomous operating apparatuses are applied to work or life, such as an autonomous lawn mower or an autonomous sweeping robot.

At present, during boundary mowing, an autonomous lawn mower generally moves for mowing along a boundary of a to-be-mowed region, and during the boundary mowing, the autonomous lawn mower is controlled to maintain a preset distance from the boundary of the to-be-mowed region as much as possible, to reduce a possibility that the autonomous lawn mower is damaged or trapped due to collision with an obstacle outside the to-be-mowed region.

However, a magnitude of the preset distance is usually preset by a designer of the autonomous lawn mower based on a common scenario of the autonomous lawn mower. Given that an actual work environment is complex and changeable, the preset distance is usually large, so that during the boundary mowing, the autonomous lawn mower substantially fails to clean grass in the vicinity of the boundary of the to-be-mowed region, and then the autonomous lawn mower often needs to manually clean or rework to clean the grass, thereby resulting in a low mowing efficiency of the autonomous lawn mower.

### SUMMARY

In view of the above, embodiments of the present disclosure provide a method for a boundary operation, an apparatus for a boundary operation, an electronic device, and a storage medium, to at least partially solve the above problem.

According to an embodiment in a first aspect of the present disclosure, a method for a boundary operation is provided, wherein the method is applied to an autonomous operating apparatus, and comprises: controlling the autonomous operating apparatus to move based on a virtual boundary and detecting a physical boundary while the autonomous operating apparatus moves; determining a boundary type of the physical boundary, after detecting the physical boundary; and controlling the autonomous operating apparatus to move in a corresponding operation mode based on the boundary type of the physical boundary, wherein at least two boundary types are defined for the physical boundary, the at least two boundary types correspond to at least two operation modes respectively, and when the autonomous operating apparatus moves in different operation modes, a respective distance between the autonomous operating apparatus and the physical boundary in each of the operation modes is different.

According to an embodiment in a second aspect of the present disclosure, an apparatus for a boundary operation is provided, comprising: a detection unit configured to control the autonomous operating apparatus to move based on a virtual boundary and detect a physical boundary while the autonomous operating apparatus moves; an identification unit configured to determine a boundary type of the physical boundary, after detecting the physical boundary; and a control unit configured to control the autonomous operating apparatus to move in a corresponding operation mode based on the boundary type of the physical boundary, wherein at least two boundary types are defined for the physical boundary, the at least two boundary types correspond to at least two operation modes respectively, and when the autonomous operating apparatus moves in different operation modes, a respective distance between the autonomous operating apparatus and the physical boundary in each of the operation modes is different.

According to an embodiment in a third aspect of the present disclosure, an electronic device is provided, comprising: a processor, a memory, a communications interface, and a communication bus, wherein the processor, the memory, and the communications interface are configured to communicate with each other through the communication bus; and the memory is configured to store at least one executable instruction, wherein the executable instruction causes the processor to implement corresponding operations of the method in the above first aspect.

According to an embodiment in a fourth aspect of the present disclosure, a computer storage medium is provided, storing a computer program thereon, wherein the program, when executed by a processor, implements the method in the above first aspect.

According to an embodiment in a fifth aspect of the present disclosure, a computer program product is provided, comprising a computer instruction, wherein the computer instruction instructs a computing device to implement the method in the above first aspect.

According to the boundary operation solution provided in an embodiment of the present disclosure, when an autonomous operating apparatus is controlled to move based on a virtual boundary, if a physical boundary is detected, the autonomous operating apparatus is controlled to perform a boundary movement operation in a corresponding operation mode based on a boundary type of the physical boundary. Therefore, since at least two boundary types correspond to at least two operation modes, and when the autonomous operating apparatus moves in different operation modes, a respective distance between the autonomous operating apparatus and a detected physical boundary in each of the operation modes is different. Therefore, during the boundary movement operation, the autonomous operating apparatus can adjust the distance between the autonomous operating apparatus and the physical boundary based on the boundary type of the physical boundary, thereby resulting in better operation effect in a region enclosed by the physical boundary and in a region located in the vicinity of the physical boundary on the premise of minimizing a possibility that the autonomous operating apparatus is trapped or damaged, maximizing an operable area of the autonomous operating apparatus and minimizing a non-operable area of the autonomous operating apparatus on the premise of ensuring the safe movement of the autonomous operating apparatus as much as possible, reducing a possibility of subsequent reworking operations or manual operations, and improving the operation efficiency of the autonomous operating apparatus.

### BRIEF DESCRIPTION OF DRAWINGS

To more clearly describe technical solutions of embodiments of the present disclosure or the prior art, drawings required to be used in the description of the embodiments or the prior art will be briefly introduced below. Apparently, the drawings in the description below are merely some embodiments disclosed in the embodiments of the present disclosure. For those of ordinary skills in the art, other drawings may also be obtained based on these drawings.
FIG. 1 is a flowchart of a method for a boundary operation according to an embodiment of the present disclosure;
FIG. 2 is a schematic diagram of an operation corresponding to a first boundary attribute according to an embodiment of the present disclosure;
FIG. 3 is a schematic diagram of an operation corresponding to a second boundary attribute according to an embodiment of the present disclosure;
FIG. 4 is a schematic diagram of an operation corresponding to a third boundary attribute according to an embodiment of the present disclosure;
FIG. 5 is a schematic diagram of an apparatus for a boundary operation according to an embodiment of the present disclosure; and
FIG. 6 is a schematic block diagram of an electronic device according to an embodiment of the present disclosure.

### DETAILED DESCRIPTION

To enable those skilled in the art to better understand technical solutions of embodiments of the present disclosure, the technical solutions of the embodiments of the present disclosure will be clearly and completely described below with reference to the drawings in the embodiments of the present disclosure. Apparently, the described embodiments are merely some, instead of all, of the embodiments of the present disclosure. All other embodiments obtained by those of ordinary skills in the art based on some embodiments among the embodiments of the present disclosure should be encompassed within the scope of protection of the embodiments of the present disclosure.

### Method for a boundary operation

An embodiment of the present disclosure provides a method for a boundary operation, which is detailed below with reference to a plurality of embodiments.

The method for a boundary operation is applied to an autonomous operating apparatus, such as an autonomous mowing apparatus or a sweeping robot. An applicable scenario of the method for a boundary operation is an operation scenario of the autonomous operating apparatus. For example, the autonomous mowing apparatus uses the method for a boundary operation to perform mowing operations, or the sweeping robot uses the method for a boundary operation to perform sweeping operations.

A working process of the autonomous mowing apparatus generally includes two stages, namely a map establishment stage and an operation stage. The method for a boundary operation provided in an embodiment of the present disclosure at least includes steps applied in the operation stage, as follows:

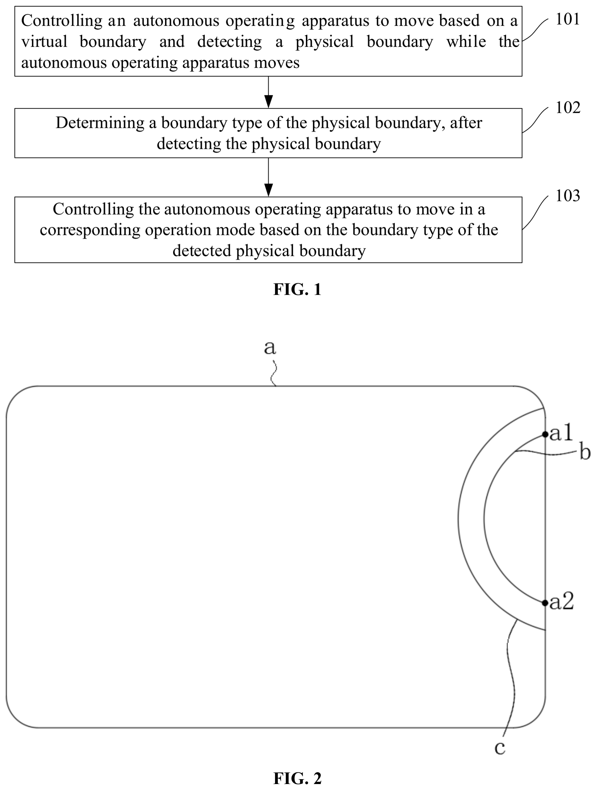

FIG. 1 is a flowchart of a method for a boundary operation according to an embodiment of the present disclosure. As shown in FIG. 1, the method for a boundary operation includes steps as follows:
Step 101: controlling an autonomous operating apparatus to move based on a virtual boundary and detecting a physical boundary while the autonomous operating apparatus moves.

Before moving, the autonomous operating apparatus can obtain the virtual boundary for indicating an operation path of the autonomous operating apparatus during the boundary operation. Specifically, the virtual boundary may be preset by a user or determined through autonomous collection by the autonomous operating apparatus in a map establishment stage. After the virtual boundary is obtained, the autonomous operating apparatus is controlled to move based on the virtual boundary to implement the boundary operation, periodically collect, during the movement, an image of a surrounding environment, and identify the image to determine whether the physical boundary can be detected.

The physical boundary may refer to a boundary surrounding an operable physical region, or may be a boundary segment of the boundary surrounding the operable physical region, and in most cases, the physical boundary detected by the autonomous operating apparatus is a boundary segment of the boundary surrounding the operable physical region, which is not limited in the embodiments of the present disclosure.

A region outside the operable physical region and close to the operable physical region is a non-operable physical region. The operable region and the non-operable region may be regions of a same type, or may be regions of different types.

In an example, when the autonomous operating apparatus is an autonomous mowing apparatus, the physical boundary may be a connection line between a lawn physical region and a physical region such as a gravel path or a fence. Based on this, the lawn physical region is an operable physical region, the physical region such as a gravel path or fence is a non-operable physical region; and the physical boundary may also be a boundary line such as a ribbon or a spray paint line located in the lawn physical region. In this case, the lawn physical regions on both sides of the boundary line are a first lawn physical region and a second lawn physical region, respectively. Based on this, the first lawn physical region is an operable physical region, and the second lawn physical region is a non-operable physical region, or the second lawn physical region is an operable physical region, and the first lawn physical region is a non-operable physical region.

In another example, when the autonomous operating apparatus is a sweeping robot, the physical boundary may be a connection line between a ground physical region and a physical region such as a fence or a furniture. Based on this, the ground physical region is an operable physical region, and the physical region such as a fence or a furniture is a non-operable physical region; the physical boundary may also be a boundary line such as a ribbon or a spray paint line located in the ground physical region. In this case, the ground physical regions on both sides of the boundary line are a first ground physical region and a second ground physical region respectively. Based on this, the first ground physical region is an operable physical region, and the second ground physical region is a non-operable physical region, or the second ground physical region is an operable physical region, and the first ground physical region is a non-operable physical region.

The physical boundary may be an outer boundary of the operable physical region, or may be an inner boundary of the operable physical region. The inner boundary may be an outer boundary of an operation forbidden region, such as a garden, an obstacle, or a pond enclosed by the lawn physical region.

Step 102: determining a boundary type of the physical boundary, after detecting the physical boundary.

If the image of the surrounding environment collected by the autonomous operating apparatus is identified to comprise the physical boundary, it means that the autonomous operating apparatus has detected the physical boundary. In this case, the boundary type of the detected physical boundary can be determined.

In a possible implementation, specific processing of the determining the boundary type of the detected physical boundary may be inputting the image comprising the physical boundary into a trained image classification model, and then obtaining an output result from the image classification model, to determine the boundary type of the physical boundary.

In another possible implementation, a plurality of boundary types are provided, each of the boundary types has a corresponding type feature, and different boundary types correspond to different type features. Based on this, specific processing of the determining the boundary type of the detected physical boundary may be determining a type feature that the detected physical boundary satisfies, and determining the boundary type of the physical boundary based on the type feature. For example, two boundary types, namely boundary type A and boundary type B, are provided. A type feature corresponding to the boundary type A is that a height difference of regions on both sides of a corresponding boundary is greater than a preset height difference, and a type feature corresponding to the boundary type B is that a height difference of regions on both sides of a corresponding boundary is less than or equal to the preset height difference. Based on this, when the height difference of the regions on both sides of the detected physical boundary is less than the preset height difference, the boundary type of the physical boundary can be determined as the boundary type B. The preset height difference may be, e.g., 0.5 cm, 1 cm, or 2 cm.

Step 103: controlling the autonomous operating apparatus to move in a corresponding operation mode based on the boundary type of the detected physical boundary.

After the boundary type of the detected physical boundary is determined, the autonomous operating apparatus is controlled to perform a boundary movement operation in the corresponding operation mode based on the physical boundary.

At least two boundary types of the physical boundary are provided. The boundary type of the detected physical boundary is any one of all provided boundary types. The at least two boundary types correspond to at least two operation modes respectively. When the autonomous operating apparatus moves in different operation modes, a respective distance between the autonomous operating apparatus and the detected physical boundary in each of the operation modes is different. Each boundary type may correspond to one operation mode, or may correspond to a plurality of operation modes.

In an embodiment of the present disclosure, if the physical boundary is detected, the autonomous operating apparatus is controlled to perform the boundary movement operation in the corresponding operation mode based on the boundary type of the physical boundary when the autonomous operating apparatus is controlled to move based on the virtual boundary. Therefore, since at least two boundary types correspond to at least two operation modes, and when the autonomous operating apparatus moves in different operation modes, a respective distance between the autonomous operating apparatus and a detected physical boundary in each of the operation modes is different. Therefore, during the boundary movement operation, the autonomous operating apparatus can adjust the distance between the autonomous operating apparatus and the physical boundary based on the boundary type of the physical boundary, thereby resulting in better operation effect in a region enclosed by the physical boundary and in a region located in the vicinity of the physical boundary on the premise of minimizing a possibility that the autonomous operating apparatus is trapped or damaged, maximizing an operable area of the autonomous operating apparatus and minimizing a non-operable area of the autonomous operating apparatus on the premise of ensuring the safe movement of the autonomous operating apparatus as much as possible, reducing a possibility of subsequent reworking operations or manual operations, and improving the operation efficiency of the autonomous operating apparatus.

Further, during the boundary movement operation, the autonomous operating apparatus can adjust the distance between the autonomous operating apparatus and the physical boundary based on the boundary type of the physical boundary, thereby improving the applicability of the autonomous operating apparatus during the boundary operation.

In a possible implementation, in a process of controlling the autonomous operating apparatus to move along the physical boundary in the corresponding operation mode based on the boundary type of the physical boundary, a boundary attribute of a first boundary segment in the virtual boundary corresponding to the detected physical boundary can be obtained, and then the autonomous operating apparatus is controlled to move in the corresponding operation mode based on the boundary type of the detected physical boundary and the boundary attribute of the first boundary segment.

The first boundary segment in the virtual boundary corresponding to the detected physical boundary may be a boundary segment in the virtual boundary directly opposite to the physical boundary. For example, specific processing of the determining the first boundary segment corresponding to the physical boundary may be using a virtual boundary between two points in the virtual boundary closest to two endpoints of the physical boundary as the first boundary segment.

After the physical boundary is detected, the boundary attribute of the first boundary segment may be further obtained, and then the autonomous operating apparatus may be controlled to move in the corresponding operation mode based on the boundary type of the physical boundary and the boundary attribute of the first boundary segment. That is, the operation path of the autonomous operating apparatus may be determined based on the boundary type of the physical boundary and the boundary attribute of the first boundary segment.

It should be noted that the boundary attribute of the first boundary segment may be determined in a process of generating the virtual boundary, or may be determined after the generating the virtual boundary is completed, which is not limited in the embodiments of the present disclosure. The obtaining the boundary attribute of the first boundary segment may be implemented after the determining the boundary type of the physical boundary, or may be implemented before the determining the boundary type of the physical boundary, or the obtaining the boundary attribute of the first boundary segment and the determining the boundary type of the physical boundary may be implemented concurrently, which is not limited in the embodiments of the present disclosure.

In an embodiment of the present disclosure, if the physical boundary is detected, the autonomous operating apparatus is controlled to perform the boundary movement operation in the corresponding operation mode based on the boundary type of the physical boundary and the boundary attribute of the first boundary segment corresponding to the physical boundary when the autonomous operating apparatus is controlled to move based on the virtual boundary. Therefore, during the boundary movement operation, the autonomous operating apparatus can determine the operation path based on the boundary type of the physical boundary and the boundary attribute of the virtual boundary, that is, the operation path of the autonomous operating apparatus is determined not only based on the boundary type of the detected physical boundary, but also based on the boundary attribute of the first boundary segment in the virtual boundary corresponding to the detected physical boundary, which can further reduce a possibility that the autonomous operating apparatus is trapped or damaged, and further optimize the operation effect of the autonomous operating apparatus to improve the operation efficiency of the autonomous operating apparatus.

Specifically, the boundary type of the physical boundary may be a first boundary type, a second boundary type, or a third boundary type, and the boundary attribute of the first boundary segment may be a first boundary attribute, a second boundary attribute, or a third boundary attribute. For example, the first boundary attribute may be an external extension-forbidden attribute, the second boundary attribute may be an external extension attribute, and the third boundary attribute may be a straddle attribute. The external extension-forbidden attribute restricts the autonomous operating apparatus from exceeding the virtual boundary during operations, and can only move within the region enclosed by the virtual boundary. The external extension attribute is set for a case where a region outside the virtual boundary is still an operable region. When the autonomous operating apparatus moves along the virtual boundary with the boundary attribute of the external extension attribute, the autonomous operating apparatus can extend a certain distance outward from the virtual boundary and move along the extended boundary in parallel to the virtual boundary. The straddle attribute is set for a case where there is a small height difference between an operable region and a non-operable region. When the autonomous operating apparatus moves along the virtual boundary with the boundary attribute of the straddle attribute, the autonomous operating apparatus can move straddling the physical boundary.

A process of setting a boundary attribute of a boundary segment in the virtual boundary may be as follows: in the map establishment stage, the autonomous operating apparatus can be controlled to move along a boundary of a to-be-operated region from a movement starting point, to collect a plurality of path points on a movement path of the autonomous operating apparatus, and, in a process of controlling the autonomous operating apparatus to move along a boundary of a to-be-operated region from a movement starting point, the autonomous operating apparatus receives boundary attribute information for indicating path points from an external device, then determines the virtual boundary based on position information of a plurality of path points, and determines a boundary attribute of each boundary segment in the virtual boundary based on the boundary attribute information. For example, in a process of controlling the autonomous operating apparatus to move along a boundary of a to-be-operated region from a movement starting point, a user can select the boundary attribute repeatedly through the external device based on the boundary of the to-be-operated region. After each selection of the boundary attribute, the external device sends the boundary attribute information corresponding to the selected boundary attribute to the autonomous operating apparatus. For first path points corresponding to boundary attribute information received by the autonomous operating apparatus twice consecutively, i.e., a path point collected by the autonomous operating apparatus upon first receipt of boundary attribute information and a path point collected between the first receipt of the boundary attribute information and second receipt of boundary attribute information, the autonomous operating apparatus can determine a boundary attribute of the first path point as a boundary attribute indicated by the boundary attribute information received for the first time, so that a boundary attribute of a boundary segment formed by the first path points in the virtual boundary is the boundary attribute indicated by the boundary attribute information received for the first time.

In addition, after the virtual boundary is determined, the virtual boundary may be further adjusted by specific processing below:
receiving a first control signal from the external device, controlling the autonomous operating apparatus to move along the virtual boundary from a first starting point to a second starting point based on the first control signal; the first and second starting points being points on the virtual boundary; receiving a starting point confirmation instruction from the external device, using the second starting point as a starting point for modifying the virtual boundary based on the starting point confirmation instruction; receiving a second control signal, controlling the autonomous operating apparatus to walk from the second starting point to an end point based on the second control signal, and determining an updated virtual boundary based on a walking trajectory between the second starting point and the end point. In a process of controlling the autonomous operating apparatus to move from the second starting point to the end point based on the second control signal, path points on the walking trajectory between the second starting point and the end point are re-collected. Then, the autonomous operating apparatus can determine the virtual boundary based on the re-collected path points, and determine a boundary attribute of each boundary segment included in a part from the second starting point to the end point in the virtual boundary based on the boundary attribute information, wherein a process of collecting path points on the part between the second starting point and the end point in the updated virtual boundary is similar to the above process of collecting path points in the original virtual boundary, and a process of obtaining the part between the second starting point and the end point in the updated virtual boundary is similar to the above process of obtaining the original virtual boundary, which are not repeated here in the embodiments of the present disclosure.

The determination of the boundary type can be implemented not only in an operation stage, but also in the map establishment stage and/or a stage of adjusting the virtual boundary, which is not limited in the embodiments of the present disclosure.

Operations of the autonomous operating apparatus are introduced below based on the boundary attribute of the first boundary segment being the first boundary attribute, the second boundary attribute, and the third boundary attribute respectively:
in a possible implementation, the boundary attribute based on the first boundary segment is the first boundary attribute, and the controlling the autonomous operating apparatus to move in the corresponding operation mode based on the boundary type of the detected physical boundary and the boundary attribute of the first boundary segment may include specific processing below:
in response to the physical boundary being within a region enclosed by the virtual boundary, or the physical boundary being outside the region enclosed by the virtual boundary and spaced from the first boundary segment by less than a first distance, controlling the autonomous operating apparatus to move in a first operation mode when the boundary attribute of the first boundary segment is a first boundary attribute and the boundary type of the physical boundary is a first boundary type, so that the autonomous operating apparatus moves within the region enclosed by the virtual boundary following an operation path spaced from the physical boundary by the first distance; and
in response to the physical boundary being within the region enclosed by the virtual boundary, or the physical boundary being outside the region enclosed by the virtual boundary and spaced from the first boundary segment by less than a second distance, controlling the autonomous operating apparatus to move in a second operation mode when the boundary attribute of the first boundary segment is the first boundary attribute and the boundary type of the physical boundary is a second boundary type or a third boundary type, so that the autonomous operating apparatus moves within the region enclosed by the virtual boundary following an operation path spaced from the physical boundary by the second distance;
wherein a spacing between the operation path of the autonomous operating apparatus and any boundary is a spacing between a center line of the autonomous operating apparatus in a width direction and the boundary when the autonomous operating apparatus is operating. The second distance is less than the first distance, for example, the first distance is a sum of 30 cm and half of the width of the autonomous operating apparatus, the second distance is a sum of 10 cm and half of the width of the autonomous operating apparatus, or the first distance is a sum of 20 cm and half of the width of the autonomous operating apparatus, and the second distance is half of the width of the autonomous operating apparatus.
in response to the physical boundary being outside the region enclosed by the virtual boundary, and the physical boundary being spaced from the first boundary segment by greater than or equal to the first distance, controlling the autonomous operating apparatus to move in a third operation mode when the boundary attribute of the first boundary segment is the first boundary attribute and the boundary type of the physical boundary is the first boundary type, so that the autonomous operating apparatus moves within the region enclosed by the virtual boundary following an operation path spaced from the virtual boundary by a third distance; and
wherein the third distance is less than the second distance, for example, the second distance is a sum of 25 cm and half of the width of the autonomous operating apparatus, the third distance is a sum of 10 cm and half of the width of the autonomous operating apparatus, or the second distance is a sum of 10 cm and half of the width of the autonomous operating apparatus, and the third distance is a sum of half of the width of the autonomous operating apparatus.
in response to the physical boundary being outside the region enclosed by the virtual boundary, and the physical boundary being spaced from the first boundary segment by greater than or equal to the second distance, controlling the autonomous operating apparatus to move in the third operation mode when the boundary attribute of the first boundary segment is the first boundary attribute, and the boundary type of the physical boundary is the second boundary type or the third boundary type.

For example, FIG. 2 is a schematic diagram of an operation corresponding to a first boundary attribute according to an embodiment of the present disclosure. As shown in FIG. 2, line a is a virtual boundary, line b is a detected physical boundary, and points a1 and a2 are two position points in the virtual boundary. Based on this, a line between the points a1 and a2 in the line a is a first boundary segment. In this case, the physical boundary is within a region enclosed by the virtual boundary, so that when a boundary attribute of the first boundary segment is the first boundary attribute, and a boundary type of the physical boundary is a first boundary type, the autonomous operating apparatus can move following line c after detecting the physical boundary b, that is, the line c is an operation path for the autonomous operating apparatus to operate in a first operation mode. In this case, distance between c and b is a first distance.

In another possible implementation, the boundary attribute based on the first boundary segment is a second boundary attribute, and the controlling the autonomous operating apparatus to move in the corresponding operation mode based on the boundary type of the detected physical boundary and the boundary attribute of the first boundary segment may include specific processing below:
determining an expanded boundary based on the virtual boundary when the boundary attribute of the first boundary segment is a second boundary attribute, wherein the expanded boundary is outside the region enclosed by the virtual boundary and is spaced from the virtual boundary by a sixth distance;
wherein the sixth distance may be preset or may be determined based on the width of the autonomous operating apparatus, for example, the sixth distance may be, e.g., 30 cm or 50 cm, or may be, e.g., half of the width of the autonomous operating apparatus.
in response to the physical boundary being within a region enclosed by the expanded boundary, or the physical boundary being outside the region enclosed by the expanded boundary and spaced from the expanded boundary by less than the first distance, controlling the autonomous operating apparatus to move in the first operation mode when the boundary attribute of the first boundary segment is the second boundary attribute and the boundary type of the physical boundary is the first boundary type, so that the autonomous operating apparatus moves within the region enclosed by the expanded boundary following the operation path spaced from the physical boundary by the first distance;
in response to the physical boundary being within the region enclosed by the expanded boundary, or the physical boundary being outside the region enclosed by the expanded boundary and spaced from the expanded boundary by less than the second distance, controlling the autonomous operating apparatus to move in the second operation mode when the boundary attribute of the first boundary segment is the second boundary attribute and the boundary type of the physical boundary is the second boundary type or the third boundary type, so that the autonomous operating apparatus moves within the region enclosed by the expanded boundary following the operation path spaced from the physical boundary by the second distance;
in response to the physical boundary being outside the region enclosed by the expanded boundary, and the physical boundary being spaced from the expanded boundary by greater than or equal to the first distance, controlling the autonomous operating apparatus to move in a fourth operation mode when the boundary attribute of the first boundary segment is the second boundary attribute and the boundary type of the physical boundary is the first boundary type, so that the autonomous operating apparatus moves within the region enclosed by the expanded boundary following an operation path spaced from the expanded boundary by a fourth distance; and
wherein the fourth distance is less than the second distance, for example, the second distance is a sum of 15 cm and half of the width of the autonomous operating apparatus, the fourth distance is a sum of 7 cm and half of the width of the autonomous operating apparatus, or the second distance is a sum of 5 cm and half of the width of the autonomous operating apparatus, and the fourth distance is a sum of half of the width of the autonomous operating apparatus.
in response to the physical boundary being outside the region enclosed by the expanded boundary, and the physical boundary being spaced from the expanded boundary by greater than or equal to the second distance, controlling the autonomous operating apparatus to move in the fourth operation mode when the boundary attribute of the first boundary segment is the second boundary attribute, and the boundary type of the physical boundary is the second boundary type or the third boundary type.

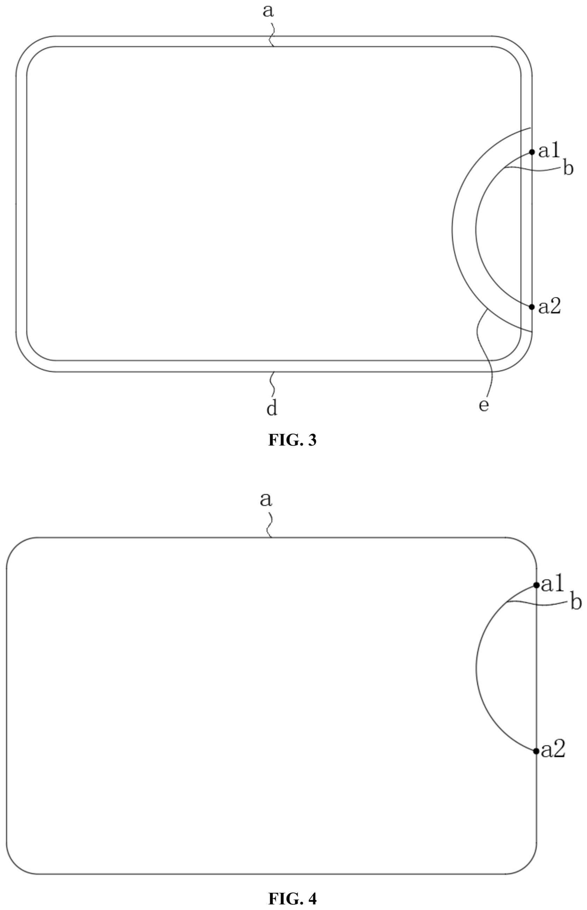

For example, FIG. 3 is a schematic diagram of an operation corresponding to a second boundary attribute according to an embodiment of the present disclosure. As shown in FIG. 3, line a is a virtual boundary, line b is a detected physical boundary, and d is an expanded boundary. Based on this, a line between points a1 and a2 in the line a is a first boundary segment. In this case, the physical boundary is within a region enclosed by the expanded boundary, so that when a boundary attribute of the first boundary segment is a second boundary attribute, and a boundary type of the physical boundary is a second boundary type, the autonomous operating apparatus can move following line e after detecting the physical boundary b, that is, line c is an operation path for the autonomous operating apparatus to operate in a second operation mode. In this case, distance between e and b is a second distance.

In another possible implementation, the boundary attribute based on the first boundary segment is a third boundary attribute, and the controlling the autonomous operating apparatus to move in the corresponding operation mode based on the boundary type of the detected physical boundary and the boundary attribute of the first boundary segment may include specific processing below:
in response to the physical boundary being within the region enclosed by the virtual boundary, or the physical boundary being outside the region enclosed by the virtual boundary and spaced from the first boundary segment by less than the first distance, controlling the autonomous operating apparatus to move in the first operation mode when the boundary attribute of the first boundary segment is a third boundary attribute and the boundary type of the physical boundary is the first boundary type;
in response to the physical boundary being within the region enclosed by the virtual boundary, or the physical boundary being outside the region enclosed by the virtual boundary and spaced from the first boundary segment by less than the second distance, controlling the autonomous operating apparatus to move in the second operation mode when the boundary attribute of the first boundary segment is the third boundary attribute and the boundary type of the physical boundary is the second boundary type;
in response to the physical boundary being within the region enclosed by the virtual boundary or on the virtual boundary, controlling the autonomous operating apparatus to move in a fifth operation mode when the boundary attribute of the first boundary segment is the third boundary attribute and the boundary type of the physical boundary is the third boundary type, so that the autonomous operating apparatus moves while straddling the physical boundary;
wherein the autonomous operating apparatus moves while straddling any boundary, which may be that the autonomous operating apparatus covers the boundary and moves smoothly, and specifically, the autonomous operating apparatus covers the boundary, which may be that rollers in the autonomous operating apparatus for moving itself are uniformly distributed on both sides of the boundary, for example, an automatic mowing apparatus is provided with a roller on either side of a forward direction of the automatic mowing apparatus, and when the autonomous operating apparatus straddles any boundary, two rollers in the autonomous operating apparatus are distributed on both sides of the boundary.
in response to the physical boundary being outside the region enclosed by the virtual boundary, and the physical boundary being spaced from the first boundary segment by greater than or equal to the first distance, controlling the autonomous operating apparatus to move in a sixth operation mode when the boundary attribute of the first boundary segment is the third boundary attribute and the boundary type of the physical boundary is the first boundary type, so that the autonomous operating apparatus moves within the region enclosed by the virtual boundary following an operation path spaced from the virtual boundary by a fifth distance;
wherein the fifth distance is less than the second distance, for example, the second distance is half of the width of the 8 cm autonomous operating apparatus, the fifth distance is half of the width of the 5 cm autonomous operating apparatus, or the second distance is half of the width of the 20 cm autonomous operating apparatus, and the fifth distance is half of the width of the autonomous operating apparatus.
in response to the physical boundary being outside the region enclosed by the virtual boundary, and the physical boundary being spaced from the first boundary segment by greater than or equal to the second distance, controlling the autonomous operating apparatus to move in the sixth operation mode when the boundary attribute of the first boundary segment is the third boundary attribute, and the boundary type of the physical boundary is the second boundary type; and
in response to the physical boundary being outside the region enclosed by the virtual boundary, controlling the autonomous operating apparatus to move in the sixth operation mode when the boundary attribute of the first boundary segment is the third boundary attribute, and the boundary type of the physical boundary is the third boundary type.

For example, FIG. 4 is a schematic diagram of an operation corresponding to a third boundary attribute according to an embodiment of the present disclosure. As shown in FIG. 4, line a is a virtual boundary, and line b is a detected physical boundary. Based on this, a line between points a1 and a2 in the line a is a first boundary segment. In this case, the physical boundary is within a region enclosed by the expanded boundary, so that when a boundary attribute of the first boundary segment is a third boundary attribute, and a boundary type of the physical boundary is a third boundary type, the autonomous operating apparatus can move straddling b after detecting the physical boundary b, that is, the autonomous operating apparatus operates in a fifth operation mode.

In a possible implementation, the method for a boundary operation further comprises: obtaining a boundary attribute of a second boundary segment in the virtual boundary when no physical boundary is detected, and controlling the autonomous operating apparatus to move in a corresponding operation mode based on the boundary attribute of the second boundary segment.

The second boundary segment is a boundary segment with the smallest spacing from the autonomous operating apparatus in the virtual boundary.

When the autonomous operating apparatus does not detect the physical boundary, the autonomous operating apparatus may periodically obtain the boundary attribute of the second boundary segment in the virtual boundary, and is controlled to move in the operation mode corresponding to the boundary attribute.

In an embodiment of the present disclosure, even if the autonomous operating apparatus does not detect the physical boundary, the autonomous operating apparatus still can move in the corresponding operation mode based on the boundary attribute of the second boundary segment in the virtual boundary. Therefore, during a boundary movement operation, if the autonomous operating apparatus does not detect the physical boundary, the autonomous operating apparatus can adjust the distance between the autonomous operating apparatus and the physical boundary based on the physical boundary and the boundary attribute of the second boundary segment, thereby resulting in better operation effect in the region enclosed by the physical boundary and in a region located in the vicinity of the physical boundary on the premise of minimizing a possibility that the autonomous operating apparatus is trapped or damaged, reducing a possibility of subsequent reworking operations or manual operations, and improving the operating efficiency of the autonomous operating apparatus.

In a possible implementation, the controlling the autonomous operating apparatus to move in the corresponding operation mode based on the boundary attribute of the second boundary segment comprises:
in response to the boundary attribute of the second boundary segment being the first boundary attribute, controlling the autonomous operating apparatus to move in a third operation mode, so that the autonomous operating apparatus moves within the region enclosed by the virtual boundary following an operation path spaced from the second boundary segment by a third distance;
in response to the boundary attribute of the second boundary segment being a second boundary attribute, controlling the autonomous operating apparatus to operate in a fourth operation mode, so that the autonomous operating apparatus moves in a region enclosed by an expanded boundary following an operation path spaced from the expanded boundary by a fourth distance, wherein the expanded boundary is outside the region enclosed by the virtual boundary and spaced from the virtual boundary by a sixth distance; and
in response to the boundary attribute of the second boundary segment being a third boundary attribute, controlling the autonomous operating apparatus to move in a sixth operation mode, so that the autonomous operating apparatus moves within the region enclosed by the virtual boundary following an operation path spaced from the second boundary segment by a fifth distance.

A spacing between the operation path and the second boundary segment is a spacing between the autonomous operating apparatus and the second boundary segment when the autonomous operating apparatus moves along the operation path.

A working process based on the automatic mowing apparatus usually includes a map establishment stage and an operation stage. The method for a boundary operation provided in an embodiment of the present disclosure may further include specific processing applied in a mowing stage, as follows:
in a possible implementation, the method for a boundary operation further comprises specific processing as follows: controlling the autonomous operating apparatus to move autonomously along the physical boundary to generate at least part of the virtual boundary; and a process of controlling the autonomous operating apparatus to move autonomously along the physical boundary comprises:
in response to the boundary type of the physical boundary being the first boundary type, controlling the autonomous operating apparatus to move within the region enclosed by the physical boundary following a map establishment path spaced from the physical boundary by the first distance, and collecting a plurality of path points on the map establishment path, to generate the at least part of the virtual boundary based on the plurality of path points; and
in response to the boundary type of the physical boundary being the second boundary type or the third boundary type, controlling the autonomous operating apparatus to move within the region enclosed by the physical boundary following a map establishment path spaced from the physical boundary by the second distance, and collecting a plurality of path points on the map establishment path, to generate the at least part of the virtual boundary based on the plurality of path points.

A spacing between the map establishment path and the physical boundary is a spacing between the autonomous operating apparatus and the physical boundary when the autonomous operating apparatus moves along the map establishment path.

In a process of generating the at least part of virtual boundary based on the plurality of path points, the plurality of collected path points may be preprocessed by, e.g., screening, fitting, and/or deletion, and the preprocessed path points may be connected to obtain the at least part of the virtual boundary.

In a process of collecting path points to generate the virtual boundary, if the autonomous operating apparatus identifies a clear and simple physical boundary, it can move autonomously along the physical boundary and collect a plurality of path points. If the autonomous operating apparatus does not identify a clear and simple physical boundary, the autonomous operating apparatus can move based on a remote control instruction and collect a plurality of path points.

In an embodiment of the present disclosure, in a process of autonomous movement of the autonomous operating apparatus along the physical boundary, the distance between the autonomous operating apparatus and the physical boundary can be determined based on the boundary type of the physical boundary, thereby reducing a possibility that the autonomous operating apparatus is trapped, or falls, or is damaged, further reducing a possibility of poor operation effect when the autonomous operating apparatus subsequently moves based on the generated virtual boundary, and improving the applicability of the autonomous operating apparatus.

In a possible implementation, the first boundary type is indicative of a physical boundary that causes the autonomous operating apparatus to be at risk of falling or being trapped, the second boundary type is indicative of a physical boundary where the autonomous operating apparatus faces no risk of falling or being trapped, and the third boundary type is indicative of a physical boundary straddled by the autonomous operating apparatus during operation. The first boundary type may be a hard boundary type, the second boundary attribute may be a soft boundary type, and the third boundary attribute may be a straddleable boundary type.

For a physical boundary that causes the autonomous operating apparatus to be at risk of falling or being trapped, specifically, a region outside the region enclosed by the physical boundary is a region that causes the autonomous operating apparatus to be at risk of falling, being damaged, or being trapped. For example, a region with, e.g., a pool, a cliff, a bush, or a tree is outside the region enclosed by the physical boundary, wherein the pool or the cliff is easily blocked by grass, and some cases near the pool or the cliff may not be conducive to smooth advancement of the lawn mower, such as a large slope or slippery ground, and a visual identification element in the autonomous operating apparatus close to an operation surface such as the lawn or the ground, and thus the autonomous operating apparatus is less likely to identify the pool or the cliff, so that the autonomous operating apparatus is at greater risk of falling and being damaged; in the bush there are likely to be fallen flowers and plants, so that the autonomous operating apparatus is easily entangled, and so that the autonomous operating apparatus is at greater risk of being trapped; and the tree, because of having protruding roots, easily blocks the movement of the autonomous operating apparatus, so that the autonomous operating apparatus is at greater risk of being trapped.

For the physical boundary where the autonomous operating apparatus faces no risk of falling or being trapped, specifically, an obstacle is installed or placed outside the region enclosed by the physical boundary, one surface of the obstacle close to the physical boundary is relatively flush, and a boundary between the obstacle and the physical boundary is clear. For example, a wire mesh, a vertical wall, a wooden wall, or a stone is placed outside the region enclosed by the physical boundary.

For the straddeable physical boundary for the autonomous operating apparatus to operate, specifically, there is a small height difference between regions on both sides of the physical boundary. For example, the height difference between the regions on both sides of the physical boundary is less than 0.3 cm, 0.5 cm, 1 cm, or 2 cm, etc.

If the autonomous operating apparatus fails to determine the boundary type of the physical boundary, it may determine the boundary type of the physical boundary as the first boundary type.

In a possible implementation, the determining the boundary type of the physical boundary, after detecting the physical boundary may comprise specific processing below:
inputting, after acquiring an image comprising the physical boundary, the image into a classification model, wherein the classification model comprises a first module, a second module, and a third module, the first module is configured to perform feature extraction on the image, to obtain an original feature map corresponding to the image, and output a plurality of processed feature maps obtained by downsampling the original feature map at different scales to the second module, the second module is configured to fuse the plurality of processed feature maps to obtain a fused feature map, and output the fused feature map to the third module, and the third module is configured to determine position information and the boundary type of the physical boundary based on the fused feature map; and
obtaining an output result from the classification model, wherein the output result comprises the position information and the boundary type of the physical boundary outputted from the third module.

During the boundary operation of the autonomous operating apparatus, the autonomous operating apparatus can periodically photograph operation environments, detect captured images, pre-process, after detecting an image comprising the physical boundary, the image by, e.g., cropping and resolution adjustment, input the processed image into a classification model, and then obtain an output result from the classification model, to obtain the boundary type of the physical boundary.

In the first module, feature extraction can be performed through a feature extraction network, and in the second module, a plurality of processed feature maps can be fused through a Feature Pyramid Network (FPN).

In a possible implementation, the third module comprises a first submodule, a second submodule, and a third submodule, the first submodule is configured to output whether there is a physical boundary within each region in the fused feature map, the second submodule is configured to output position information of a physical boundary in each region of the fused feature map with the physical boundary, the third submodule is configured to output an image category of each region in the fused feature map, and the third module is configured to determine the position information and the boundary type of the physical boundary based on output results from the first submodule, the second submodule, and the third submodule.

The fused feature map can be rasterized, and for each grid obtained after the rasterization, a corresponding region is used as a region in the fused feature map. An image category of a single region may be any one of an image category corresponding to the first boundary type, an image category corresponding to the second boundary type, an image category corresponding to the third boundary type, and an image category corresponding to a background image.

### Apparatus for a boundary operation

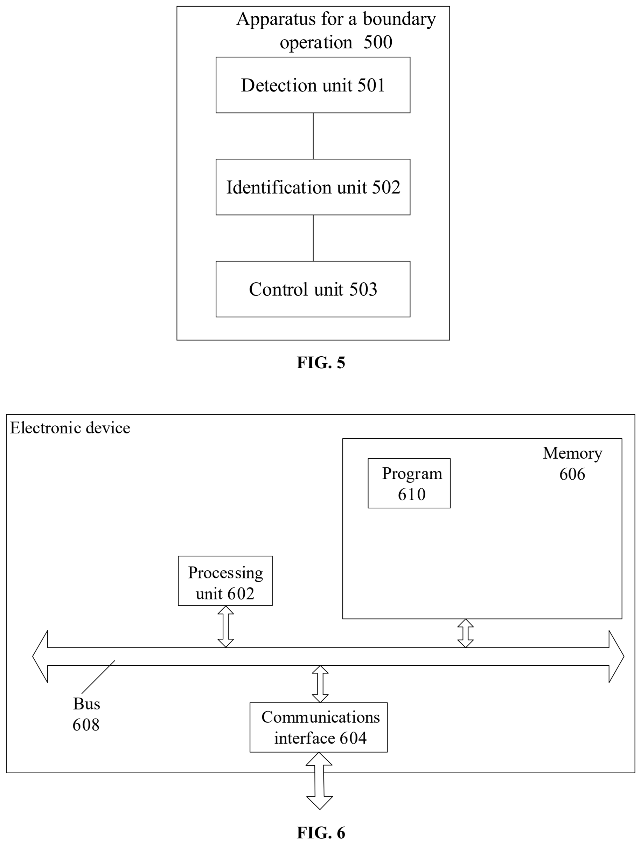

Corresponding to the above method embodiments, FIG. 5 shows a schematic diagram of an apparatus for a boundary operation according to an embodiment of the present disclosure. As shown in FIG. 5, the apparatus 500 for a boundary operation comprises:
a detection unit 501 configured to control the autonomous operating apparatus to move based on a virtual boundary and detect a physical boundary while the autonomous operating apparatus moves;
an identification unit 502 configured to determine a boundary type of the physical boundary, after detecting the physical boundary; and
a control unit 503 configured to control the autonomous operating apparatus to move in a corresponding operation mode based on the boundary type of the physical boundary, wherein at least two boundary types are defined for the physical boundary, the at least two boundary types correspond to at least two operation modes respectively, and when the autonomous operating apparatus moves in different operation modes, a respective distance between the autonomous operating apparatus and the physical boundary in each of the operation modes is different.

In an example, the detection unit 501 is configured to control a center control module and an image processing module, wherein the central control module is configured to control the autonomous operating apparatus to move based on a virtual boundary in a virtual map and positioning information of a positioning module in the autonomous operating apparatus; and the image processing module is connected to a camera in the autonomous operating apparatus. During the movement, the autonomous operating apparatus is photographed by the camera to obtain images, and the image processing module is configured to detect the images obtained by the camera to detect the physical boundary.

In an embodiment of the present disclosure, the detection unit 501 can control the autonomous operating apparatus to move based on the virtual boundary and detect the physical boundary, the identification unit 502 can determine the boundary type of the physical boundary after detecting the physical boundary, and the control unit 503 can control the autonomous operating apparatus to perform a boundary movement operation in the corresponding operation mode based on the boundary type of the physical boundary. Therefore, since at least two boundary types correspond to at least two operation modes, and when the autonomous operating apparatus moves in different operation modes, a respective distance between the autonomous operating apparatus and a detected physical boundary in each of the operation modes is different. Therefore, during the boundary movement operation, the autonomous operating apparatus can adjust the distance between the autonomous operating apparatus and the physical boundary based on the boundary type of the physical boundary, thereby resulting in better operation effect in a region enclosed by the physical boundary and in a region located in the vicinity of the physical boundary on the premise of minimizing a possibility that the autonomous operating apparatus is trapped or damaged, maximizing an operable area of the autonomous operating apparatus and minimizing a non-operable area of the autonomous operating apparatus on the premise of ensuring the safe movement of the autonomous operating apparatus as much as possible, reducing a possibility of subsequent reworking operations or manual operations, and improving the operation efficiency of the autonomous operating apparatus.

It should be noted that the apparatus for a boundary operation of this embodiment is configured to implement the corresponding method for a boundary operation in the above method embodiments, and has the beneficial effects of the corresponding method embodiments, which will not be repeated here.

### Electronic device

FIG. 6 is a schematic block diagram of an electronic device provided in an embodiment of the present disclosure. Specific embodiments of the present disclosure do not impose any limitation on specific implementations of the electronic device. As shown in FIG. 6, the electronic device may comprise: a processor 602, a communications interface 604, a memory 606, and a communication bus 608, wherein:
the processor 602, the communications interface 604, and the memory 606 are configured to communicate with each other through the communication bus 608.

The communications interface 604 is configured to communicate with other electronic devices or servers.

The processor 602 is configured to execute a program 610, and specifically may implement relevant steps of the method for a boundary operation in any one of the above embodiments.

Specifically, the program 610 may comprise a program code. The program code comprises a computer operation instruction.

The processor 602 may be a CPU, or an Application Specific Integrated Circuit (ASIC), or one or more integrated circuits configured to implement embodiments of the present disclosure. One or more processors included in a smart device may be processors of a same type, e.g., one or more CPUs; or may be processors of different types, e.g., one or more CPUs and one or more ASICs.

RISC-V is an open-source instruction set architecture based on a reduced instruction set (RISC) principle, can be applied to various aspects such as a single chip microcomputer and a FPGA chip, and can be specifically applied to the fields, such as security of Internet of Things, industrial control, a mobile phone, and a personal computer. Moreover, it is designed based on actual situations such as a small size, a fast speed, and low power consumption, so that it is particularly adapted to a modern computing device, such as a warehouse-scale cloud computer, a high-end mobile phone, and a tiny embedded system. With the emergence of the artificial intelligence Internet of Things (AIoT), the RISC-V instruction set architecture has also attracted more and more attention and support, and is expected to become the next generation of a widely used CPU architecture.

The computer operation instruction in an embodiment of the present disclosure may be a computer operation instruction based on the RISC-V instruction set architecture. Accordingly, the processor 602 may be designed based on the RISC-V instruction set. Specifically, a processor chip in the electronic device provided in an embodiment of the present disclosure may be a chip designed using the RISC-V instruction set. The chip can execute an executable code based on a configured instruction, thereby implementing the method for a boundary operation in the above embodiments.

The memory 606 is configured to store the program 610. The memory 606 may include a high-speed RAM memory, and may further include a non-volatile memory, e.g., at least one disk memory.

The program 610 may specifically be used for causing the processor 602 to implement the method for a boundary operation in any one of the above embodiments.

Corresponding description of the corresponding steps and units of the method for a boundary operation in any one of the above embodiments may be referred to for specific implementations of the steps in the program 610, which will not be repeated here. Those skilled in the art can clearly understand that, for convenience and simplicity of description, the description of corresponding processes in the above method embodiments may be referred to for specific operating processes of the above-described devices and modules, which will not be repeated here.

With the electronic device in an embodiment of the present disclosure, when an autonomous operating apparatus is controlled to move based on a virtual boundary, if a physical boundary is detected, the autonomous operating apparatus is controlled to perform a boundary movement operation in a corresponding operation mode based on a boundary type of the physical boundary. Therefore, since at least two boundary types correspond to at least two operation modes, and when the autonomous operating apparatus moves in different operation modes, a respective distance between the autonomous operating apparatus and a detected physical boundary in each of the operation modes is different. Therefore, during the boundary movement operation, the autonomous operating apparatus can adjust the distance between the autonomous operating apparatus and the physical boundary based on the boundary type of the physical boundary, thereby resulting in better operation effect in a region enclosed by the physical boundary and in a region located in the vicinity of the physical boundary on the premise of minimizing a possibility that the autonomous operating apparatus is trapped or damaged, maximizing an operable area of the autonomous operating apparatus and minimizing a non-operable area of the autonomous operating apparatus on the premise of ensuring the safe movement of the autonomous operating apparatus as much as possible, reducing a possibility of subsequent reworking operations or manual operations, and improving the operation efficiency of the autonomous operating apparatus.

### Computer storage medium

The present disclosure further provides a computer-readable storage medium storing an instruction for causing a machine to implement the method for a boundary operation as described herein. Specifically, a system or apparatus equipped with a storage medium may be provided, wherein the storage medium stores a software program code for implementing the functions of any one embodiment among the above embodiments, and makes a computer (or CPU or MPU) of the system or the apparatus read and execute the program code stored in the storage medium.

In this case, the program code read from the storage medium itself can implement the functions of any one embodiment among the above embodiments, and thus the program code and the storage medium storing the program code constitute a part of the present disclosure.

Embodiments of storage mediums for providing the program code include a floppy disk, a hard disk, a magneto-optical disk, an optical disk (e.g., CD-ROM, CD-R, CD-RW, DVD-ROM, DVD-RAM, DVD-RW, or DVD+RW), a magnetic tape, a non-volatile memory card, and a ROM. Optionally, the program code may be downloaded from a server computer through a communication network.

### Computer program product

An embodiment of the present disclosure further provides a computer program product, comprising a computer instruction, wherein the computer instruction instructs a computing device to implement the corresponding operations in any one of the above method embodiments.

It should be noted that user-related information (including but not limited to user device information, user personal information, etc.) and data (including but not limited to sample data for model training, data for analysis, stored data, displayed data, etc.) involved in the embodiments of the present disclosure are all information and data that are authorized by a user or fully authorized by all parties. Relevant data needs to be acquired, used, and processed following relevant laws, regulations, and standards of relevant countries and regions, and be provided with a corresponding operation portal for users to choose or refuse authorization.

It should be noted that, depending on the implementation requirements, the components/steps described in the embodiments of the present disclosure may be split into more components/steps, or two or more components/steps or partial operations of the components/steps may be combined into novel components/steps to achieve the goal of the embodiments of the present disclosure.

The above method according to the embodiments of the present disclosure may be implemented in hardware or firmware, or be implemented as software or a computer code storable in a recording medium (such as a CD ROM, a RAM, a floppy disk, a hard disk, or a magneto-optical disk), or be implemented as a computer code that is downloaded from a network, is originally stored in a remote recording medium or a non-transitory machine-readable medium, and will be stored in a local recording medium, such that the method described herein may be processed by such software stored on a recording medium using a universal computer, a dedicated processor, or programmable or dedicated hardware (such as an ASIC or FPGA). It is understandable that a computer, a processor, a microprocessor controller, or programmable hardware includes a storage component (e.g., a RAM, a ROM, or a flash memory) that can store or receive software or a computer code. The method described herein is implemented when the software or the computer code is accessed and executed by the computer, the processor, or the hardware. Further, when a universal computer accesses the code for implementing the method shown herein, the execution of the code converts the universal computer to a dedicated computer configured to implement the method shown herein.

It should be noted that user-related information (including but not limited to user device information, user personal information, etc.) and data (including but not limited to sample data for model training, data for analysis, stored data, displayed data, etc.) involved in the embodiments of the present disclosure are all information and data that are authorized by a user or fully authorized by all parties. Relevant data needs to be acquired, used, and processed following relevant laws, regulations, and standards of relevant countries and regions, and be provided with a corresponding operation portal for users to choose or refuse authorization.

As will be appreciated by those of ordinary skills in the art, the various example units and method steps described in combination with the embodiments disclosed herein can be implemented by electronic hardware, or a combination of computer software and electronic hardware. Whether these functions are executed by hardware or software depends on particular applications and design constraints of the technical solutions. Those skilled in the art may implement the described functions for particular applications using different methods, but such implementation should not be considered as falling beyond the scope of the embodiments of the present disclosure.

The above embodiments are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions are also encompassed within the scope of the embodiments of the present disclosure, and the scope of patent protection of the embodiments of the present disclosure should be defined by the claims.

## Claims

1. A method for a boundary operation, applied to an autonomous operating apparatus, comprising:
controlling the autonomous operating apparatus to move based on a virtual boundary and detecting a physical boundary while the autonomous operating apparatus moves;
determining a boundary type of the physical boundary, after detecting the physical boundary; and
controlling the autonomous operating apparatus to move in a corresponding operation mode based on the boundary type of the physical boundary, wherein at least two boundary types are defined for the physical boundary, the at least two boundary types correspond to at least two operation modes respectively, and when the autonomous operating apparatus moves in different operation modes, a respective distance between the autonomous operating apparatus and the physical boundary in each of the operation modes is different.

2. The method according to claim 1, wherein the controlling the autonomous operating apparatus to move in the corresponding operation mode along the physical boundary based on the boundary type of the physical boundary comprises:
obtaining a boundary attribute of a first boundary segment corresponding to the physical boundary in the virtual boundary; and
controlling the autonomous operating apparatus to move in the corresponding operation mode based on the boundary type of the physical boundary and the boundary attribute of the first boundary segment.

3. The method according to claim 2, wherein the controlling the autonomous operating apparatus to move in the corresponding operation mode based on the boundary type of the physical boundary and the boundary attribute of the first boundary segment comprises:
in response to the physical boundary being within a region enclosed by the virtual boundary, or the physical boundary being outside the region enclosed by the virtual boundary and spaced from the first boundary segment by less than a first distance, controlling the autonomous operating apparatus to move in a first operation mode when the boundary attribute of the first boundary segment is a first boundary attribute and the boundary type of the physical boundary is a first boundary type, so that the autonomous operating apparatus moves within the region enclosed by the virtual boundary following an operation path spaced from the physical boundary by the first distance; and
in response to the physical boundary being within the region enclosed by the virtual boundary, or the physical boundary being outside the region enclosed by the virtual boundary and spaced from the first boundary segment by less than a second distance, controlling the autonomous operating apparatus to move in a second operation mode when the boundary attribute of the first boundary segment is the first boundary attribute and the boundary type of the physical boundary is a second boundary type or a third boundary type, so that the autonomous operating apparatus moves within the region enclosed by the virtual boundary following an operation path spaced from the physical boundary by the second distance, wherein the second distance is less than the first distance.

4. The method according to claim 3, wherein the controlling the autonomous operating apparatus to move in the corresponding operation mode based on the boundary type of the physical boundary and the boundary attribute of the first boundary segment comprises:
in response to the physical boundary being outside the region enclosed by the virtual boundary, and the physical boundary being spaced from the first boundary segment by greater than or equal to the first distance, controlling the autonomous operating apparatus to move in a third operation mode when the boundary attribute of the first boundary segment is the first boundary attribute and the boundary type of the physical boundary is the first boundary type, so that the autonomous operating apparatus moves within the region enclosed by the virtual boundary following an operation path spaced from the virtual boundary by a third distance, wherein the third distance is less than the second distance; and
in response to the physical boundary being outside the region enclosed by the virtual boundary, and the physical boundary being spaced from the first boundary segment by greater than or equal to the second distance, controlling the autonomous operating apparatus to move in the third operation mode when the boundary attribute of the first boundary segment is the first boundary attribute, and the boundary type of the physical boundary is the second boundary type or the third boundary type.

5. The method according to claim 3, wherein the controlling the autonomous operating apparatus to move in the corresponding operation mode based on the boundary type of the physical boundary and the boundary attribute of the first boundary segment comprises:
determining an expanded boundary based on the virtual boundary when the boundary attribute of the first boundary segment is a second boundary attribute, wherein the expanded boundary is outside the region enclosed by the virtual boundary and is spaced from the virtual boundary by a sixth distance;
in response to the physical boundary being within a region enclosed by the expanded boundary, or the physical boundary being outside the region enclosed by the expanded boundary and spaced from the expanded boundary by less than the first distance, controlling the autonomous operating apparatus to move in the first operation mode when the boundary attribute of the first boundary segment is the second boundary attribute and the boundary type of the physical boundary is the first boundary type, so that the autonomous operating apparatus moves within the region enclosed by the expanded boundary following the operation path spaced from the physical boundary by the first distance; and
in response to the physical boundary being within the region enclosed by the expanded boundary, or the physical boundary being outside the region enclosed by the expanded boundary and spaced from the expanded boundary by less than the second distance, controlling the autonomous operating apparatus to move in the second operation mode when the boundary attribute of the first boundary segment is the second boundary attribute and the boundary type of the physical boundary is the second boundary type or the third boundary type, so that the autonomous operating apparatus moves within the region enclosed by the expanded boundary following the operation path spaced from the physical boundary by the second distance.

6. The method according to claim 5, wherein the controlling the autonomous operating apparatus to move in the corresponding operation mode based on the boundary type of the physical boundary and the boundary attribute of the first boundary segment comprises:
in response to the physical boundary being outside the region enclosed by the expanded boundary, and the physical boundary being spaced from the expanded boundary by greater than or equal to the first distance, controlling the autonomous operating apparatus to move in a fourth operation mode when the boundary attribute of the first boundary segment is the second boundary attribute and the boundary type of the physical boundary is the first boundary type, so that the autonomous operating apparatus moves within the region enclosed by the expanded boundary following an operation path spaced from the expanded boundary by a fourth distance, wherein the fourth distance is less than the second distance; and
in response to the physical boundary being outside the region enclosed by the expanded boundary, and the physical boundary being spaced from the expanded boundary by greater than or equal to the second distance, controlling the autonomous operating apparatus to move in the fourth operation mode when the boundary attribute of the first boundary segment is the second boundary attribute, and the boundary type of the physical boundary is the second boundary type or the third boundary type.

7. The method according to claim 3, wherein the controlling the autonomous operating apparatus to move in the corresponding operation mode based on the boundary type of the physical boundary and the boundary attribute of the first boundary segment comprises:
in response to the physical boundary being within the region enclosed by the virtual boundary, or the physical boundary being outside the region enclosed by the virtual boundary and spaced from the first boundary segment by less than the first distance, controlling the autonomous operating apparatus to move in the first operation mode when the boundary attribute of the first boundary segment is a third boundary attribute and the boundary type of the physical boundary is the first boundary type;
in response to the physical boundary being within the region enclosed by the virtual boundary, or the physical boundary being outside the region enclosed by the virtual boundary and spaced from the first boundary segment by less than the second distance, controlling the autonomous operating apparatus to move in the second operation mode when the boundary attribute of the first boundary segment is the third boundary attribute and the boundary type of the physical boundary is the second boundary type; and
in response to the physical boundary being within the region enclosed by the virtual boundary or on the virtual boundary, controlling the autonomous operating apparatus to move in a fifth operation mode when the boundary attribute of the first boundary segment is the third boundary attribute and the boundary type of the physical boundary is the third boundary type, so that the autonomous operating apparatus moves while straddling the physical boundary.

8. The method according to claim 7, wherein the controlling the autonomous operating apparatus to move in the corresponding operation mode based on the boundary type of the physical boundary and the boundary attribute of the first boundary segment comprises:
in response to the physical boundary being outside the region enclosed by the virtual boundary, and the physical boundary being spaced from the first boundary segment by greater than or equal to the first distance, controlling the autonomous operating apparatus to move in a sixth operation mode when the boundary attribute of the first boundary segment is the third boundary attribute and the boundary type of the physical boundary is the first boundary type, so that the autonomous operating apparatus moves within the region enclosed by the virtual boundary following an operation path spaced from the virtual boundary by a fifth distance, wherein the fifth distance is less than the second distance;
in response to the physical boundary being outside the region enclosed by the virtual boundary, and the physical boundary being spaced from the first boundary segment by greater than or equal to the second distance, controlling the autonomous operating apparatus to move in the sixth operation mode when the boundary attribute of the first boundary segment is the third boundary attribute, and the boundary type of the physical boundary is the second boundary type; and
in response to the physical boundary being outside the region enclosed by the virtual boundary, controlling the autonomous operating apparatus to move in the sixth operation mode when the boundary attribute of the first boundary segment is the third boundary attribute, and the boundary type of the physical boundary is the third boundary type.

9. The method according to claim 1, wherein the method further comprises:
obtaining a boundary attribute of a second boundary segment in the virtual boundary when no physical boundary is detected, wherein the second boundary segment is a boundary segment with the smallest spacing from the autonomous operating apparatus in the virtual boundary; and
controlling the autonomous operating apparatus to move in the corresponding operation mode based on the boundary attribute of the second boundary segment.

10. The method according to claim 9, wherein the controlling the autonomous operating apparatus to move in the corresponding operation mode based on the boundary attribute of the second boundary segment comprises:
in response to the boundary attribute of the second boundary segment being a first boundary attribute, controlling the autonomous operating apparatus to move in a third operation mode, so that the autonomous operating apparatus moves within the region enclosed by the virtual boundary following an operation path spaced from the second boundary segment by a third distance;
in response to the boundary attribute of the second boundary segment being a second boundary attribute, controlling the autonomous operating apparatus to move in a fourth operation mode, so that the autonomous operating apparatus moves within a region enclosed by an expanded boundary following an operation path spaced from the expanded boundary by a fourth distance, wherein the expanded boundary is outside the region enclosed by the virtual boundary and spaced from the virtual boundary by a sixth distance; and
in response to the boundary attribute of the second boundary segment being a third boundary attribute, controlling the autonomous operating apparatus to move in a sixth operation mode, so that the autonomous operating apparatus moves within the region enclosed by the virtual boundary following an operation path spaced from the second boundary segment by a fifth distance.

11. The method according to any one of claims 1-10, wherein the method further comprises: controlling the autonomous operating apparatus to move autonomously along the physical boundary to generate at least part of the virtual boundary; and
in a process of controlling the autonomous operating apparatus to move autonomously along the physical boundary,
in response to the boundary type of the physical boundary being the first boundary type, controlling the autonomous operating apparatus to move within the region enclosed by the physical boundary following a map establishment path spaced from the physical boundary by the first distance, and collecting a plurality of path points on the map establishment path, to generate the at least part of the virtual boundary based on the plurality of path points; and
in response to the boundary type of the physical boundary being the second boundary type or the third boundary type, controlling the autonomous operating apparatus to move within the region enclosed by the physical boundary following a map establishment path spaced from the physical boundary by the second distance, and collecting a plurality of path points on the map establishment path, to generate the at least part of the virtual boundary based on the plurality of path points, wherein the second distance is less than the first distance.

12. The method according to any one of claims 1-10, wherein the first boundary type is indicative of a physical boundary that causes the autonomous operating apparatus to be at risk of falling or being trapped, the second boundary type is indicative of a physical boundary where the autonomous operating apparatus faces no risk of falling or being trapped, and the third boundary type is indicative of a physical boundary straddled by the autonomous operating apparatus during operation .

13. The method according to claim 1, wherein the determining the boundary type of the physical boundary after detecting the physical boundary comprises:
inputting, after acquiring an image comprising the physical boundary, the image into a classification model, wherein the classification model comprises a first module, a second module, and a third module, the first module is configured to perform feature extraction on the image, to obtain an original feature map corresponding to the image, and output a plurality of processed feature maps obtained by downsampling the original feature map at different scales to the second module, the second module is configured to fuse the plurality of processed feature maps to obtain a fused feature map, and output the fused feature map to the third module, and the third module is configured to determine position information and the boundary type of the physical boundary based on the fused feature map; and
obtaining an output result from the classification model, wherein the output result comprises the position information and the boundary type of the physical boundary outputted from the third module.

14. The method according to claim 13, wherein the third module comprises a first submodule, a second submodule, and a third submodule, the first submodule is configured to output whether there is a physical boundary within each region in the fused feature map, the second submodule is configured to output position information of a physical boundary within each region of the fused feature map with the physical boundary, the third submodule is configured to output an image category of each region in the fused feature map, and the third module is configured to determine the position information and the boundary type of the physical boundary based on output results from the first submodule, the second submodule, and the third submodule.

15. An apparatus for a boundary operation, comprising:
a detection unit configured to control an autonomous operating apparatus to move based on a virtual boundary and detect a physical boundary while the autonomous operating apparatus moves;
an identification unit configured to determine a boundary type of the physical boundary, after detecting the physical boundary; and
a control unit configured to control the autonomous operating apparatus to move in a corresponding operation mode based on the boundary type of the physical boundary, wherein at least two boundary types are defined for the physical boundary, the at least two boundary types correspond to at least two operation modes respectively, and when the autonomous operating apparatus moves in different operation modes, a respective distance between the autonomous operating apparatus and the physical boundary in each of the operation modes is different.

16. An electronic device, comprising: a processor, a memory, a communications interface, and a communication bus, wherein the processor, the memory, and the communications interface are configured to communicate with each other through the communication bus; and
the memory is configured to store at least one executable instruction, wherein the executable instruction causes the processor to implement the method according to any one of claims 1-14.

17. A computer storage medium, storing a computer program thereon, wherein the program, when executed by a processor, implements the method according to any one of claims 1-14.

18. A computer program product, comprising a computer instruction, wherein the computer instruction instructs a computing device to implement the method according to any one of claims 1-14.
